(19) Europäisches Patentamt
European Patent Office
Office européen des brevets

(11) Veröffentlichungsnummer: **0 427 070 A2**

(12) # EUROPÄISCHE PATENTANMELDUNG

(21) Anmeldenummer: **90120647.4**

(51) Int. Cl.[5]: **C08K 5/54**, C08L 81/02

(22) Anmeldetag: **27.10.90**

(30) Priorität: **09.11.89 DE 3937333**

(43) Veröffentlichungstag der Anmeldung: **15.05.91 Patentblatt 91/20**

(84) Benannte Vertragsstaaten: **BE DE FR GB IT**

(71) Anmelder: **BAYER AG**
**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Heinz, Hans-Detlef, Dr.**
**Breslauer Strasse 31**
**W-4150 Krefeld 11(DE)**
Erfinder: **Traenckner, Hans-Joachim, Dr.**
**Leiebos 31, Bus 00111**
**B-2060 Merksem(BE)**
Erfinder: **Bushong, William, Dr.**
**Mobay Co., Plastics, Bldg. 8**
**Pittsburgh, PA 15205(US)**

(54) **Mischungen aus Polyarylensulfiden, Glasfasern und Nitrogruppen-haltigen Silanen.**

(57) Die Erfindung betrifft Mischungen aus Polyarylensulfiden, Glasfasern und Nitrogruppen-haltigen Silanen, die sich durch gute mechanische Eigenschaften (z.B. höhere Biegefestigkeit oder Randfaserdehnung) auszeichnen.



Xerox Copy Centre

## MISCHUNGEN AUS POLYARYLENSULFIDEN, GLASFASERN UND NITROGRUPPEN-HALTIGEN SILANEN

Polyarylensulfide (PAS) sind bekannt (siehe z.B. US 3 354 129, EP 171 021). Sie sind inerte, hochtemperaturbeständige Thermoplaste, die einen hohen Füllgrad z.B. mit Glasfasern oder anderen anorganischen Füllstoffen erlauben. Der Einsatz dieser Polymeren, insbesondere des Polyphenylensulfids (PPS), nimmt in Bereichen zu, die bislang Duroplasten vorbehalten waren.

PPS hat unbefriedigende mechanische Eigenschaften für einige Anwendungen im Spritzgußbereich. Es hat sich daher als Vorteil erwiesen, PPS-Glasfaser-Compounds durch Mischung mit anderen Thermoplasten in ihren mechanischen Eigenschaften zu verbessern.

So sind Mischungen von Polyarylensulfiden mit Polycarbonaten bekannt (siehe z.B. JP 51-59952, EP 104 543, US 4 021 596).

Für bestimmte Anwendungsgebiete ist das Eigenschaftsprofil derartiger Mischungen jedoch nicht immer ganz befriedigend.

Ferner ist bekannt, daß sich PPS durch Mischung mit Maleinimiden in seinen Eigenschaften modifizieren läßt. Meist wird dabei eine Verzweigung von PPS angestrebt, indem entweder PPS unter oxidativen Bedingungen mit Maleinimiden umgesetzt (siehe z.B. JP 021 876) oder PPS mit Verbindungen umgesetzt wird, die mindestens drei Maleinimidgruppen und einen Triazinring enthalten (siehe z.B. JP 202 162 und EP 105 639). Andere Patente haben Mischungen aus Polysulfidsulfonblöcken enthaltenden Polyarylensulfiden und Maleinimiden zum Gegenstand (EP 275 991).

Ein anderer Ansatz zur Verbesserung mechanischer Eigenschaften von PPS-Compounds ist die Verwendung von Reagenzien, die die Glasfaser-Matrix-Haftung beeinflussen.

Es wurde überraschend gefunden, daß Mischungen von Polyarylensulfiden, insbesondere von Polyphenylensulfid (PPS), mit Glasfasern bei Zusatz von geringen Mengen an Nitrogruppen-haltigen Silanen eine verbesserte Biegefestigkeit aufweisen.

Gegenstand der Erfindung sind Mischungen aus

A) von 90 bis 20 Gew.-%, vorzugsweise von 80 bis 20 Gew.-%, Polyarylensulfiden, vorzugsweise Polyphenylensulfiden mit einer Schmelzviskosität von 5 bis 1000 Pa.s, gemessen bei einer Schergeschwindigkeit von 1000 $s^{-1}$ und einer Temperatur von 306° C,

B) von 0,01 bis 5 Gew.-%, vorzugsweise von 0,1 bis 2 Gew.-%, Nitrogruppen-haltigen Silanen der allgemeinen Formeln I, II oder III, bevorzugt der Formeln I oder II, besonders bevorzugt der Formel I,

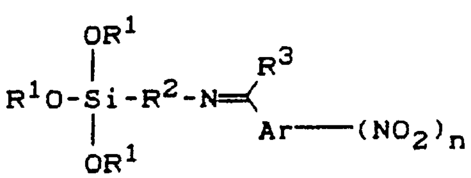

I

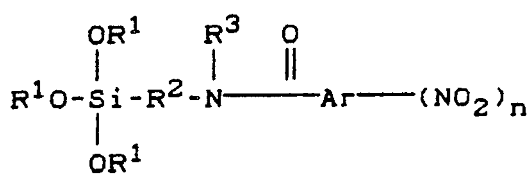

II

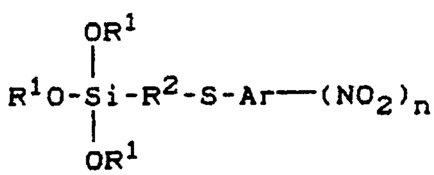

III

in denen

$R^1$ unabhängig voneinander gleich oder verschieden $C_1$-$C_4$-Alkyl oder $C_6$-$C_{14}$-Aryl, bevorzugt Phenyl, bedeutet,

$R^2$ $C_1$-$C_{22}$-Alkylen, bevorzugt $C_3$-Alkylen oder Phenylen, besonders bevorzugt 1,3-Propandiyl bedeutet,

$R^3$ Wasserstoff, $C_1$-$C_{22}$-Alkyl (bevorzugt Methyl) oder $C_6$-$C_{14}$-Aryl (bevorzugt Phenyl) besonders bevorzugt Wasserstoff bedeutet,

Ar einen $C_6$-$C_{14}$-Arylrest bedeutet, gegebenenfalls ein- oder mehrfach substituiert durch unabhängig

voneinander Halogen oder $C_1$- bis $C_{12}$-Alkyl und
n eine ganze Zahl von 1 bis 3 bedeutet,
und
C) von 9,99 bis 79,99, bevorzugt von 20 bis 60 Gew.-%, Glasfasern und/oder anderen anorganischen oder organischen Füll- und Zusatzstoffen.

Bevorzugte erfindungsgemäße Stoffe der Formel I sind
3-(4-Nitrobenzylidenamino)-1-triethoxysilano-propan,
3-(3-Nitrobenzylidenamino)-1-triethoxysilano-propan,
3-(2-Nitrobenzylidenamino)-1-triethoxysilano-propan,
3-(2,4-Dinitrobenzylidenamino)-1-triethoxysilano-propan,
3-(3,5-Dinitrobenzylidenamino)-1-triethoxysilano-propan,
(4-Nitroacetophenon)-3-triethoxysilanopropanimin und
(2-Nitroacetophenon)-3-triethoxysilanopropanimin.

Bevorzugte erfindungsgemäße Stoffe der Formel II sind
2-Nitro-N-(3-triethoxysilanopropyl)benzamid,
4-Nitro-N-(3-triethoxysilanopropyl)benzamid,
4-Nitro-N-methyl-N-(3-triethoxysilanopropyl)benzamid,
3,5-Dinitro-N-(3-triethoxysilanopropyl)benzamid,
3,5-Dinitro-N-methyl-N-(3-triethoxysilanopropyl)benzamid,
2,4-Dinitro-N-(3-triethoxysilanopropyl)benzamid und
2,4-Dinitro-N-methyl-N-(3-triethoxysilanopropyl)benzamid.

Bevorzugte erfindungsgemäße Stoffen der Formel III sind (4-Nitrophenyl)-(3-triethoxysilanopropyl)sulfid und (2,4-Dinitrophenyl)-(3-triethoxysilanopropyl)sulfid.

Die erfindungsgemäßen Additive der Formel I sind z.B. aus dem entsprechenden Aminogruppen-haltigen Silan und einem Nitroarylaldehyd in Gegenwart von Toluol als Solvens und Schlepper zur azeotropen Entwässerung in an sich bekannter Weise (Organikum, VEB-Verlag, 11. Aufl. 1972, Seite 414 ff.) zugänglich.

Die erfindungsgemäßen Additive der Formel II lassen sich z.B. aus dem entsprechenden Aminogruppen-haltigen Silan und einem Nitrobenzoylchlorid nach Schotten Baumann herstellen (Organikum, VEB-Verlag, 11. Auflage. S. 446).

Die Additive der Formel III sind z.B. aus 3-Mercapto-1-triethoxysilanopropan und einem Nitrochlorbenzol durch Umsetzung in unpolar-aprotischen Lösungsmitteln in Gegenwart von Basen zugänglich.

Polyarylensulfide im Sinne der Erfindung sind z.B. die durch Umsetzung von Dihalogenaromaten, insbesondere von p-Dichlorbenzol mit Schwefelspendern, z.B. Natriumsulfid, erhältlichen linearen und verzweigten Polykondensate (siehe z.B. US-A 3 354 129, EP-A 171 021).

Erfindungsgemäße Glasfasern sind handelsübliche, gegebenenfalls auf übliche Art geschlichtete (silanierte) Glasfasern mit einem Durchmesser von 1,5 bis 20 µm, vorzugsweise von 1 bis 10 µm. Die Glasfasern können als Endlosfasern eingesetzt werden und/oder in Längen von 0.05 bis 10 mm, vorzugsweise von 0,1 bis 2 mm eingesetzt werden.

Als Endlosfasern (Rovings) können die Glasfasern in Verfahren zur Herstellung von endlosverstärktem Unidirektionalverbund eingesetzt werden.

Gegebenenfalls können auch anstelle der Glasfasern handelsübliche Glaskugeln als Füllstoffe eingesetzt werden (z.B. Ballotini-Glaskugeln).

Weitere erfindungsgemäße Füllstoffe oder Zusatzstoffe sind z.B. Glimmer, Talkum, Quarzmehl, Metalloxide und -sulfide (z.B. $TiO_2$, ZnO, ZnS), Graphit, Ruß, Fasern (z.B. aus Quarz, Kohle), Carbonate (z.B. $MgCO_3$, $CaCO_3$) oder Sulfate (z.B. $CaSO_4$, $BaSO_4$), Metallpulver, -fasern, -flitter oder -flocken.

Als weitere übliche Zusatzstoffe können Pigmente, Entformungsmittel, E-Wachse, Fließhilfsmittel, Nucleierungsmittel oder Stabilisatoren eingesetzt werden.

Die erfindungsgemäßen Mischungen können auch Maleinimide von Di- oder Polyaminen zusätzlich enthalten.

Die Herstellung der erfindungsgemäßen Mischungen aus Polyarylensulfiden, Nitrogruppen-haltigen Silanen und bekannten handelsüblichen Füll- und Verstärkungsstoffen kann nach an sich bekannten Compoundierverfahren auf Ein- oder Mehrstreckenextrudern, vorzugsweise Extrudern mit Entgasungsvorrichtung, z.B. ZSK-Maschinen, geeigneten Knetern wie BUSS-KO-Knetern oder Agglomeratoren (z.B. Pallmann/Condux) erfolgen.

Dabei können die Nitrogruppen-haltigen Silane zuerst auf die Füllstoffe aufgetragen werden oder während der Compoundierung der Polyarylensulfidschmelze zugegeben werden.

Außerdem ist es möglich, diese Mischungen über Pulvermischtechnologie aus den einzelnen Komponenten, dosiert oder als Gemisch, herzustellen.

Solche Pulvermischungen können z.B. auf Konusschnecken-, Taumel-, Turbinen-, Rhönrad- oder ähnlichen Mischern hergestellt werden.

Weiterer Gegenstand der Erfindung ist die Verwendung der erfindungsgemäßen Mischungen als Formmassen zur Herstellung von Formkörpern, Halbzeugen, Folien und Fasern.

## Beispiele

### Beispiel 1

Synthese von 3-(4-Nitrobenzylidenamino)-1-triethoxysilanopropan

Man mischt 66,3 g 3-Amino-1-triethoxysilanopropan, 45,3 g 4-Nitrobenzaldehyd und 500 ml Toluol und erhitzt 2 h am Wasserabscheider. Man filtriert und engt das Filtrat ein. Man erhält 107,2 g Produkt.

### Beispiel 2

Man mischt ein PPS-Compound aus 45 Gewichtsteilen Glasfaser, 3 Gewichtsteilen Mikrotalk und 52 Gewichtsteilen PPS.

Als Glasfaser wird die handelsübliche, mit Polyurethanfilmbildner und Aminosilanluftvermittler geschlichtete Glasfaser (57916®, (BAYER) eingesetzt.

### Beispiel 3

Man mischt ein PPS-Compound aus 45 Gewichtsteilen Glasfasern, 3 Gewichtsteilen Mikrotalk und 52 Gewichtsteilen PPS mit 1 Gewichtsteil 3-(4-Nitrobenzylidenlamino)-1-triethoxysilanopropan.

### Beispiel 4

Man mischt ein PPS-Compound aus 45 Gewichtsteilen Glasfaser, 3 Gewichtsteilen Mikrotalk und 52 Gewichtsteilen PPS mit 5 Gewichsteilen Rutil.

### Beispiel 5

Man mischt ein PPS-Compound aus 45 Gewichtsteilen Glasfaser, 3 Gewichtsteilen Mikrotalk und 52 Gewichtsteilen PPS mit 5 Gewichtsteilen eines Gemisches aus 90 Gew.-% Rutil und 10 Gew.-% 3-(4-Nitrobenzalamino)-1-triethoxysilanopropan.

### Beispiel 6

Man mischt ein PPS-Compound aus 45 Gewichtsteilen Glasfaser, 3 Gewichtsteilen Mikrotalk, 52 Gewichtsteilen PPS und 0,5 Gewichtsteilen 3-(3,5-Dinitrobenzoylamino)-1-triethoxysilanopropan.

Die beschriebenen Ausgangsstoffe wurden dosiert einem Doppelschneckenextruder mit Entgasungsvorrichtung zugegeben. Die Temperatur bei der Compoundierung betrug 330 °C.

Am Ende der Compoundierung wurde ein zylindrisches Granulat erhalten, das zu entsprechenden Formkörpern verarbeitet wurde, die die nachfolgend aufgeführten mechanischen Kennwerte ergaben.

Folgende Tabelle faßt die Ergebnisse zusammen:

| Formkörper nach Beispiel | Biegefestigkeit ($N/mm^2$) | Randfaserdehnung | Biegemodul ($N/mm^2$) |
|---|---|---|---|
| 2 | 260 | 1,8 | 15000 |
| 3 | 291 | 1,93 | 15226 |
| 4 | 199 | 1,35 | 14800 |
| 5 | 212 | 1,42 | 14600 |
| 6 | 297 | 2,0 | 14300 |

Man sieht beim Vergleich von Beispiel 2 mit den Beispielen 3 oder 6, sowie beim Vergleich von Beispiel 4 und Beispiel 5, das die erfindungsgemäßen Additive eine deutliche Erhöhung der Biegefestigkeit und anderer mechanischer Kennwerte bewirken.

## Ansprüche

1) Mischungen aus

A) von 90 bis 20 Gew.-% Polyarylensulfiden mit einer Schmelzviskosität von 5 bis 1000 Pa.s, gemessen bei einer Schergeschwindigkeit von 1000 $s^{-1}$ und einer Temperatur von 306° C,

B) von 0,01 bis 5 Gew.-% Nitrogruppen-haltigen Silanen der allgemeinen Formeln I, II oder III

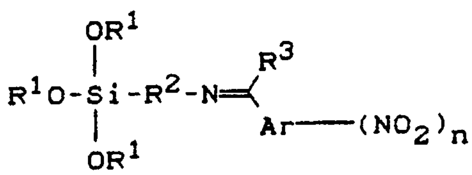

I

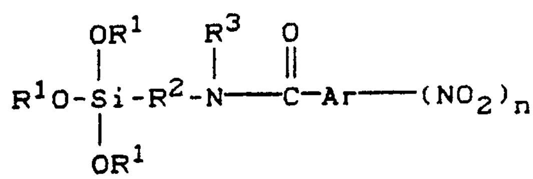

II

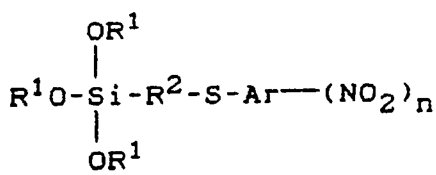

III

in denen

$R^1$ unabhängig voneinander gleich oder verschieden $C_1$-$C_4$-Alkyl oder $C_6$-$C_{14}$-Aryl bedeutet,

$R^2$ $C_1$-$C_{22}$- Alkylen bedeutet,

$R^3$ Wasserstoff, $C_1$-$C_{22}$-Alkyl oder $C_6$-$C_{14}$-Aryl bedeutet,

Ar einen $C_6$-$C_{14}$-Arylrest bedeutet, gegebenenfalls ein oder mehrfach substituiert durch unabhängig voneinander Halogen oder $C_1$- bis $C_{12}$-Alkyl und

n eine ganze Zahl von 1 bis 3 bedeutet,

und

C) von 9,99 bis 79,99 Gew.-% Glasfasern und/oder anderen anorganischen oder organischen Füll-und Zusatzstoffen .

2. Verwendung der Mischung nach Anspruch 1, zur Herstellung biegesteifer Formkörper.

3. Formkörper, hergestellt aus Formmassen nach Anspruch 1.